# EUROPEAN PATENT APPLICATION

(11) **EP 4 018 845 A1**
(43) Date of publication of application: **29.06.2022**
(21) Application number: 20020665.4
(22) Date of filing: 30.12.2020
(51) Int. Cl.: A23P 30/40, A23G 3/32, A23G 3/52

(54) **CARAMEL WITH REDUCED DENSITY AND PRODUCTION METHOD THEREOF**

(30) Priority: 24.12.2020 TR 202021659
(71) Applicant: Eti Gida Sanayi Ve Ticaret Anonim Sirketi, 26110 Eskisehir (TR)
(72) Inventor: Marasli, Serdar, 26110 Eskisehir (TR); Demirci, Sultan, 26110 Eskisehir (TR)
(74) Representative: Dereligil, Ersin

(57) **Abstract**

The invention relates to the caramel of which density is reduced for use in the food industry and the production method of said caramel.

## Description

### TECHNICAL AREA

The invention relates to caramel of which density is reduced for use in the food industry and the production method of said caramel.

### PRIOR ART

Caramel is a water-based confectionery with a dry matter content varying between 70-90%. Maillard reactions occur as the milk proteins and reducing sugars in the content of the caramel are exposed to a certain temperature, and the unique aroma and taste profile of the caramel thereby develops. In the current technical field, there are multiple caramel preparation methods. However, each method is similar in itself and there may be differentiation according to the food ingredients used. A two-phase caramel preparation method is commonly used. The first phase is the milk solution (milk cream or concentrated/condensed milk) preparation phase. In this process, sugar and some food additives are mixed with milk powder and water, or milk at high speed to obtain a solution with a dry matter amount varying between 20-60% by weight. The second phase is the sugar syrup preparation phase. In this process, sugar syrup is prepared by mixing refined sugar, glucose, fructose or invert sugar, oil, water and some food additives. Then, the final mixture is obtained by mixing the milk solution prepared in the first phase and the sugar syrup prepared in the second phase in certain proportions; this mixture is cooked in a jacketed vessel with scraper blades under pressure (inside the evaporator) or without applying pressure (in an open vessel) at temperatures varying between 112-130 °C. When the desired dry matter value is reached, the cooking process is stopped and aroma is added and cooled to 30-75 °C. The caramel obtained is sugary, sticky and dense viscous (viscosity: 1.20-1.30 cP) and is cooled with the help of round cylinders and laid on the nougat or directly on the production line by laying method in bar form food products . After the cooling process, the caramel cooled in the cooling station is covered with different coatings such as chocolate and/or cocolin, couverture, and seasoned with seasonings such as peanut, wheat cakes and rice cakes, or not seasoned, whereby it is turned into a food product in the form of a bar.

Another area of using caramel with a lower dry matter proportion such as 70-80° Brix (70-80% dissolved matter by weight) is its use as a fluid filling in chocolate with a lower dry matter proportion such as 70-80° Brix (70-80% dissolved matter by weight). Caramel can be deposited using different methods and covered with various coatings such as chocolate, couverture, cocoline, or can be used as a layer of chocolate. Caramel can be used not only in chocolate, but also as a filler in products such as cake or marshmallows; it is located between two biscuits like cream in biscuit varieties produced by sandwiching method. In addition, it can be used as a coating material for different biscuits and cakes. The prepared caramel can be turned into caramel drops/particles by various methods and can be used as ingredient or seasoning in many different products such as bars, cakes, chocolate, biscuits, wafers.

Caramel has an intense and sharp flavor in all the areas of use and forms mentioned. Since caramel is sticky and dense in the technical field, it cannot be aerated, and its intense sharp caramel taste and aroma cannot be softened. In the prior art, the patent application, the publication number WO 03/037101 A1, contains information on reducing the sharp taste and stickiness of caramel, aims to denature the proteins in the egg white powder (caused by temperature) and to trap the air achieved by the foam form is trapped into the caramel with the addition of the foam obtained from the egg white to the hot caramel (80-130 °C) by use of static mixer. However, the air retention stability of the aerated caramel, which was formed as a result of the mentioned process, remained low due to the denaturing of the egg whites at the temperatures used, and a decrease in the product quality was detected during the shelf life.

As a result, due to the disadvantages described above and the insufficiency of current solutions, it was necessary to make an improvement in the relevant technical field.

### BRIEF DESCRIPTION OF THE INVENTION

The present invention relates to caramel of which density is reduced and production method of said caramel, meeting the above-mentioned requirements, eliminating all disadvantages and bringing some additional advantages.

The main object of the invention is to obtain caramel with reduced density. By reducing its density, caramel can be processed and/or shaped more easily, it can be consumed more easily in larger portions alone or in combination with high sugar and sweetness ingredients such as croquant, toffe, jelly, cocolin, couverture. According to the invention, the viscous and dense caramel at 44-55 °C is aerated with the addition of the ingredients (such as gelatin (200-260 bloom), egg white powder, sodium bicarbonate, milk protein (casein)) with different properties such as emulsifiers, thickeners, stabilizers, gelling agents, water binders, foam/film formers, hydrocolloids to the caramel in the form of solution, whereby the intense and sharp caramel taste and aroma are softened. In addition, by giving the caramel a marshmallow-like form, its usage areas and methods in many different products such as bar, chocolate, cake, biscuit and wafer have been developed.

The object of the invention is to decrease the density of caramel, soften its intense and sharp taste and aroma and reduce its stickiness by mixing the caramel with a non-foamy aeration solution obtained by combination of gelatin (200-260 bloom), egg white powder, sodium bicarbonate, milk protein, and then at the last step giving the caramel a foamy structure as a result of entrapping it with air at proportions varying between 20-50% by volume, with or without the use of high speed (minimum 1200 rpm) aeration equipment. Among the ingredients used in the aeration solution of the invention, gelatin and egg white powder are essential ingredients for the invention to fulfill its function. At least one of sodium bicarbonate and milk protein is preferred.

The structural and characteristic features and all advantages of the invention will be understood more clearly thanks to the figures given below and the detailed explanation written by making references to these figures. Therefore, the evaluation should be made by taking these figures and detailed explanations into consideration.

### BRIEF DESCRIPTION OF THE FIGURES

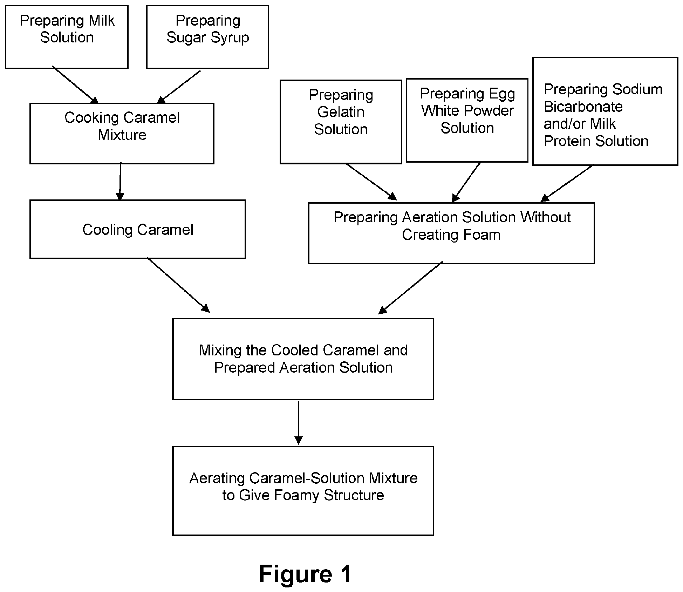

Figure 1 shows the flow chart of the caramel production process.

### DETAILED DESCRIPTION OF THE INVENTION

In this detailed description, the preferred applications of the caramel with reduced density and the production method of said caramel according to the invention are explained only for a better understanding of the subject matter and without any limiting effect.

The invention relates to caramel with reduced density and the production method of said caramel. Figure 1 shows the flow chart of the caramel production process. Accordingly, in the production of caramel, milk solution is prepared to serve as the amino acid source in Maillard reactions responsible for the formation of caramel specific aroma and color. The milk solution is prepared in a jacketed or non-jacketed mixer tank with a dry matter proportion of 20-60% by weight and at a temperature between 40-70 °C. Another component of caramel is sugar syrup. Sugar syrup is obtained by mixing refined sugar, glucose, fructose or invert sugar, oil, water and some food additives. In the next process step, the milk solution and sugar syrup are mixed in certain proportions to form a caramel mixture. Subsequently, the caramel mixture is cooked in a jacketed vessel with scraper blades, preferably under pressure (inside the evaporator) (preferably at pressures ranging from 2-4 bar) or without applying pressure in an open vessel preferably at temperatures ranging from 112-130 °C, until reaching the value of 75-85° Brix (preferably 78-80° Brix), which is expected in the product properties. When the desired dry matter value is reached, the cooking process is stopped and the aroma is added and the cooling process begins. In said cooling process, the caramel should preferably be cooled down to 40-55 °C. This cooling stage is also important in terms of allowing the air to be trapped more easily in the next stage. In addition, the temperature range of 40-55 °C is important in that the egg whites in the aeration solution do not denature. Because, the egg white protein starts to denature at 57.3 °C.

One of the most important process steps in the production of caramel with reduced density is the preparation of aeration solution. In this step process, the ingredients with different properties such as emulsifier, stabilizer and hydrocolloid etc. such as gelatin (200-260 bloom), sodium bicarbonate, egg white powder, milk protein (casein), are used according to the final product in which the caramel is used. Said gelatin, egg white powder and milk protein has an effect on increasing the foam capacity and foam stability to be formed by mixing the aeration solution with caramel. Sodium bicarbonate provides aeration by creating gas. At the same time, milk protein has an enhancing effect on gelling gelatin. These ingredients are dissolved unsimultaneously or simultaneously in at least one kind of solvent (preferably water) at the appropriate temperature separately or together to prepare an aeration solution without foaming. In the process of preparing the aeration solution, on the one hand gelatin is dissolved in at least one kind of solvent, preferably in water, on the other hand the egg white powder is dissolved in at least one kind of solvent, preferably in water. Sodium bicarbonate and/or milk protein (casein), which can optionally be used, is dissolved in at least one kind of solvent, preferably in water. Gelatin (200-260 bloom), and egg white powder are essential to the invention. At least one of sodium bicarbonate and milk protein (casein) is preferred. At this stage, egg white powder and sodium bicarbonate and/or milk protein can be dissolved separately or together in solvent (preferably water) at a temperature of 20-35 °C (preferably 30 °C). If gelatin and optionally milk protein are used, they are dissolved together or separately in a solvent (preferably water) between 70-90 °C (preferably 85 °C) at temperatures that will not trigger the gelatin gelling property (preferably above 40 °C) and then cooled preferably to 40-55°C in order to prevent gelation and prevent egg white from denaturing. Then, the egg white powder solution and the sodium bicarbonate and/or milk protein (casein) solution are mixed together with the gelatin solution at low speed (preferably less than 30 rpm), preferably for 5-10 minutes to ensure only mixing without foaming. Thus, a non-foaming aeration solution is prepared thanks to the properties of the mentioned solutions and low speed mixing.

Preferably, enzyme treatments can be used to improve and develop the foaming and foam stability properties of the egg white solution. For this purpose, phospholipase enzyme (from 0.1% to 5% by weight), sodium acid pyrophosphate and organic acids (tartaric acid, citric acid and the like) can be added to the egg white solution. Foam stability can also be increased by adding guar gum as a hydrocolloid to the egg white solution. The phospholipase enzyme can be added to the egg white solution at proportions ranging from 0.25 ml/kg to 0.5 ml/kg, which is more effective on the foaming capacity. An increase of 100% in foaming capacity and 4% in foam stability was observed in egg white solutions which 0.25 ml/kg of phospholipase enzyme was added to and kept for 24 hours compared to solutions without enzyme. Organic acids such as tartaric acid, citric acid and sodium acid pyrophosphate are effective on the foam stability of egg whites. These additives, which can be added in proportions ranging from 0.1% to 15% by weight in general, increase the foaming capacity by 10% to 30% while providing an improvement in foam stability from 20% to 100%. For example, tartaric acid added at a proportion of 3% increases the foam forming capacity by 17% and the foam stability by 43%. When the application temperature rises above 57.3 °C, denaturation begins in egg white proteins. If the application temperature will be above this temperature, hydrocolloids such as guar gum, pectin can be added to the egg white solution at proportions ranging from 0.01 % to 0.5% by weight to increase the foam stability.

This aeration solution prepared is mixed with caramel, preferably at 40-55 °C, at temperatures where gelation will not occur (preferably greater than 40 °C) and egg whites will not denature, before being added to the caramel according to the final product properties .

In the invention, the aeration solution is 10-25% by weight of gelatin (200-260 bloom) (preferably 18-23%), 5-15% by weight of egg white powder, 65-85% by weight of water, 0-2% by weight of sodium bicarbonate, 0-15% by weight of milk protein (casein) (preferably 0-10%). Thanks to the mentioned usage proportions, it is possible to decrease the density much more, to protect the aerated caramel structure and to obtain an abundant porous structure. Table 1 shows some of the trials with different amounts of ingredients.

**Table 1: Aeration Solution Trials and Contents (by weight)**

| | Trial 1 | Trial 2 | Trial 3 | Trial 4 | Trial 5 |
|---|---|---|---|---|---|
| Gelatin (%) | 14 | 20 | 22 | 22 | 20 |
| Egg white powder (%) | 8 | 14,4 | 10 | 6 | 11 |
| Water (%) | 78 | 65.1 | 67,3 | 67,3 | 68 |
| Sodium Bicarbonate (%) | - | 0.5 | 0.7 | 0.7 | 1.0 |
| Milk Protein (Casein) (%) | - | - | - | 4 | - |
| Aerated Caramel Density (g / cm 3) | 0,90 | 1.07 | 0.70 | 0.84 | 0.88 |

In a preferred embodiment of the invention, the aeration solution contains 22% by weight of gelatin (200-260 bloom), 10% by weight of egg white powder, 67.3% by weight of water and 0.7% by weight of sodium bicarbonate.

The resulting aeration solution, preferably at 40-55 °C, and caramel, preferably at 40-55 °C, are mixed homogeneously for 1-5 minutes at low speed (preferably 30-60 rpm) without foaming. The temperature range of 40-55 °C mentioned here is also important in terms of not denaturing the egg whites in the aeration solution. Egg white protein begins to denature at 57.3 °C. 75-90% (preferably 90%) caramel by weight and 10-25% by weight (preferably 10%) aeration solution are used in the mixing process. Table 2 shows some of the trials with different amounts (by weight) of caramel and aeration solution and the density of the aerated caramel obtained.

**Table 2: Trials of Mixing Aeration Solution and Caramel**

| | Trial 1 | Trial 1 | Trial 3 |
|---|---|---|---|
| Caramel (%) | 75 | 82 | 90 |
| Aeration Solution (%) | 25 | 18 | 10 |
| Aerated Caramel Density (g/cm 3) | 0,90 | 0.82 | 0.70 |

After mixing the aeration solution with the caramel, the caramel and aeration solution mixture is aerated using a high speed (minimum 1200 rpm) aeration equipment or a simple mixer without the use of aeration equipment, whereby a foamy structure is achieved, and the density of the currently known caramel is reduced from 1.20-1.30 g/cm³ to a minimum of 0.70 g/cm³. The formation of the foam at this stage is critical to the invention. In this sense, in order to avoid the formation of foam in the process steps before this step, the mixing is applied at low speeds in the previous process steps. What makes the invention different from the prior art is that the fluid caramel and the aeration solution that does not contain foam is mixed so as to form a foamy structure at this stage. With this method being developed, caramel has enjoyed a foamy structure with a foam-free aeration solution at the last stage, whereby aeration at the changing proportions between 20-50% by volume are provided, and thus the density of the caramel is reduced.

In order to solve the problems in the technical field and to fulfill the mentioned purposes, the invention is a production method of caramel of which density is reduced to a minimum of 0.70 g/cm3, comprising the following process steps:
- Cooking caramel containing milk solution and sugar syrup until it reaches 75-85° Brix value,
- Cooling the cooked caramel,
- Dissolving gelatin (200-260 bloom) and egg white powder in at least one kind of solvent,
- Dissolving sodium bicarbonate and/or milk protein (casein) in at least one of kind solvent,
- Preparing aeration solution by mixing the obtained gelatin solution and egg white solution with sodium bicarbonate and/or milk protein solution,
- Mixing the aeration solution and the cooled caramel,
- Giving a foamy structure by aerating the mixture of caramel and aeration solution at a minimum speed of 1200 rpm at the proportions varying between 20-50%.

## Claims

1. A production method of caramel with reduced density, **characterized in that** it comprises the following steps:
- Cooking caramel containing milk solution and sugar syrup until it reaches 75-85° Brix value,
- Cooling the cooked caramel,
- Dissolving gelatin and egg white powder in at least one kind of solvent,
- Dissolving sodium bicarbonate and/or milk protein in at least one of kind solvent,
- Preparing aeration solution by mixing the obtained gelatin solution and egg white solution with sodium bicarbonate and/or milk protein solution,
- Mixing the aeration solution and the cooled caramel,
- Giving a foamy structure by aerating the mixture of caramel and aeration solution at a minimum speed of 1200 rpm at the proportions varying between 20-50%.

2. The production method of caramel according to claim 1, **characterized in that** it comprises the process step of cooking the caramel mixture until it reaches the 78-80° Brix range.

3. The production method of caramel according to claim 1, **characterized in that** it comprises the process step of cooling the cooked caramel up to 40-55 °C.

4. The production method of caramel according to claim 1, **characterized in that** it comprises the process step of mixing gelatin solution and egg white powder solution with sodium bicarbonate solution and/or milk protein solution at a speed less than 30 rpm for 5-10 minutes.

5. The production method of caramel according to claim 1, **characterized in that** it comprises the process step of dissolving egg white powder and sodium bicarbonate and/or milk protein separately or together in a solvent between 20-35 °C.

6. The production method of caramel according to claim 1, **characterized in that** it comprises the process step of dissolving egg white powder and sodium bicarbonate and/or milk protein separately or together in a solvent at 30 °C.

7. The production method of caramel according to claim 1, **characterized in that** it comprises the process step of dissolving gelatin and milk protein together or separately in a solvent between 70-90 °C.

8. The production method of caramel according to claim 1, **characterized in that** it comprises the process step of dissolving gelatin and milk protein together or separately in a solvent at 85 °C.

9. The production method of caramel according to claim 1, **characterized in that** it comprises the process step of applying cooling to the temperature range of 40-55 °C to prevent gelation and prevent egg whites from denaturing.

10. The production method of caramel according to claim 1, **characterized in that** it comprises the process step of mixing the cooled caramel with said aeration solution at 40-55 °C for 1-5 minutes at 30-60 rpm without foaming.

11. The production method of caramel according to claim 1, **characterized in that** it comprises the process step of mixing 75-90% by weight of caramel and 10-25% by weight of aeration solution.

12. The production method of caramel according to claim 1, **characterized in that** it comprises the process step of mixing 90% by weight of caramel and 10% by weight of aeration solution.

13. The production method of caramel according to claim 1, **characterized in that** it comprises the process step of obtaining egg white powder solution by enzyme applications.

14. The production method of caramel according to claim 1, **characterized in that** it comprises the process step of obtaining caramel of which density is reduced to 0.70 g/cm³.

15. The production method of caramel according to claim 1, **characterized in that** the aeration solution comprises
- 10-25% by weight of gelatin (200-260 bloom)
- 5-15% by weight of egg white powder,
- 65-85% by weight of water,
- 0-2% by weight of sodium bicarbonate and/or 0-15% by weight of milk protein (casein).
